# EUROPÄISCHE PATENTSCHRIFT

(11) **EP 4 015 356 B1**
(45) Veröffentlichungstag und Bekanntmachung des Hinweises auf die Patenterteilung: **25.06.2025**
(21) Anmeldenummer: 21213044.7
(22) Anmeldetag: 08.12.2021
(51) Int. Cl.: B62D 31/02, B62D 47/02, B62D 63/02

(54) **VERFAHREN ZUR FERTIGUNG EINER SELBSTTRAGENDEN KAROSSERIE FÜR EIN FAHRZEUG ZUR PERSONENBEFÖRDERUNG SOWIE ENTSPRECHENDES FAHRZEUG**
METHOD OF MANUFACTURING A SELF-SUPPORTING BODY FOR A PASSENGER TRANSPORT VEHICLE, AND CORRESPONDING VEHICLE
PROCÉDÉ DE PRODUCTION D'UNE CARROSSERIE AUTOPORTANTE POUR UN VÉHICULE DESTINÉ AU TRANSPORT DES PERSONNES, AINSI QUE VÉHICULE CORRESPONDANT

(30) Priorität: 15.12.2020 DE 102020133496
(43) Veröffentlichungstag der Anmeldung: 22.06.2022
(73) Patentinhaber: MAN Truck & Bus SE, 80995 München (DE)
(72) Erfinder: Foertig, Lucas Peter, 61440 Oberursel (DE); Bernhardt, Moritz, 39114 Madgeburg (DE); Albers, Alex, 48485 Neuenkirchen (DE); Ecke, Paul, 39116 Magdeburg (DE); Englert, Alexa, 39104 Magdeburg (DE); Frilling, Peter, 39112 Magdeburg (DE); Lenz, Sören, 39114 Magdeburg (DE); Li, Yuanmao, 39126 Magdeburg (DE); Magnus, Felix, 39164 Wanzleben-Börde (DE); Nieto, Jorge, 39106 Magdeburg (DE); Augustin, Laura, 14471 Potsdam (DE); Wiesner, Martin, 39104 Magdeburg (DE)
(74) Vertreter: v. Bezold & Partner Patentanwälte - PartG mbB

(56) Entgegenhaltungen:
- EP-A1- 3 689 718
- WO-A1-2013/093531
- DE-C- 469 417
- US-A- 4 254 987

## Beschreibung

Die Erfindung betrifft ein Verfahren zur Fertigung einer selbsttragenden Karosserie für ein Fahrzeug zur Personenbeförderung, wobei die Karosserie aus mehreren Karosseriemodulen zusammengesetzt ist. Weiterhin betrifft die Erfindung ein Fahrzeug zur Personenbeförderung mit einer ebensolchen Karosserie.

Während sich im PKW-Bereich selbsttragende Karosseriebauweisen durchgesetzt haben, ist im Nutzfahrzeug-Bereich auch heute noch die Rahmenbauweise üblich, bei der der Fahrzeugaufbau auf ein tragendes Fahrgestell (Leiterrahmen) aufgesetzt wird. Insbesondere bei der Fertigung von Omnibussen sind jedoch auch selbsttragende Karosseriekonzepte im Nutzfahrzeug-Bereich bekannt, um dadurch eine hohe Steifigkeit bei geringem Eigengewicht zu realisieren.

Eine dieser selbsttragenden Bauweisen ist hierbei die Gitterrahmenbauweise (auch als Integralbauweise bezeichnet), bei der Profilträger in Form eines Fachwerks zu einem stabilen und torsionssteifen Gitterrahmen verbunden werden, an dem sodann verschalende Elemente sowie weitere, teilweise mittragende Funktionsbaugruppen wie Motorträger oder Achsaufnahmen befestigt werden. Die vorgenannte Gitterrahmenstruktur besteht hierbei in der Regel aus einer Schweißkonstruktion aus Profilstahl, wobei je nach Beanspruchung unterschiedliche Querschnitte und Materialien (Stahlsorten) eingesetzt werden.

Bei der Fertigung werden die in Meterware angelieferten Profile zunächst auf die benötigte Länge bzw. die benötigten Winkel abgelängt und anschließend - je nach zu fertigendem Bauteil - ausgerichtet, eingespannt und verschweißt. Nachteilig an den dazu bislang im Stand der Technik bekannten Ansätzen ist hierbei vor allem der hohe Platzbedarf sowie die hohen Anforderungen an die Flexibilität der, vorzugsweise automatisierten, Schweißanlagen aufgrund der komplexen Rahmenstruktur mit ihren vielen (unterschiedlichen) Verbindungsstellen. Insbesondere mit fortschreitender Größe der fachwerkartigen Strukturen können sich so Probleme mit der grundsätzlichen Erreichbarkeit bzw. ungünstigen Schweißwinkeln ergeben.

Aus der WO 2013/093531 A1 ist ein Straßenfahrzeug mit einem integralen Karosserierahmen bekannt. Der integrale Karosserierahmen des Fahrzeugs besteht aus in sich geschlossenen, ringförmig geschlossenen und senkrecht zur Fahrzeuglängsachse angeordneten tragenden Einheiten aus jeweils einer durchgehenden Materialbahn, die als ein den vorderen Radkasten umfassendes Frontmodul, ein den hinteren Radkasten umfassendes Heckmodul und eine beliebige Anzahl von Fenstermodulen und Türmodulen, die zwischen dem vorderen und hinteren Modul in beliebiger Reihenfolge angeordnet sind, ausgebildet sind. Dabei sind die Module in an sich bekannter Weise durch eine Nut und ein Verbindungsprofil, die entlang ihrer jeweils benachbarten, in Ebenen senkrecht zur Karosserielängsachse liegenden Umfangskanten angeordnet sind, durch Kleben verbunden. Die Module bestehen aus einem Verbundwerkstoff mit einer Matrix, die mit einem Gewebe aus Verstärkungsfäden verstärkt ist, die in bestimmten Fällen in mehreren Lagen verlegt sind, wobei der von der Außenschale und der Innenschale eingeschlossene Raum durch ein die Trägheit erhöhendes Kernmaterial ausgefüllt ist, um eine Sandwichstruktur zu bilden.

Ferner offenbart die DE 469 417 C einen Wagenkasten, wobei der Wagenkasten aus einzelnen für sich hergestellten biegungssteifen Querabschnitten besteht und an den gegenseitigen Berührungsflächen zentriert ist, wobei der Längs- und Querverband des gesamten aus mehreren Abschnitten bestehenden Wagenkastens durch Zugorgane hergestellt ist, die die einzelnen Wagenkastenseiten, insbesondere die Bodenseiten des Wagenkastens, umlaufen und an einem Ende eine Spannvorrichtung besitzen.

Aus der US 4 254 987 A ist eine Trägerstruktur eines Motorbusses bekannt, wobei die Trägerstruktur eine Vielzahl von modularen Zellen umfasst, von denen jede zwei rechteckige Endrahmen umfasst, die aus zwei Ständern mit Kanalprofilen und oberen und unteren Querstücken mit Kanalprofilen bestehen. Die Kanäle sind dabei axial von dem anderen Rahmen abgewandt und weisen Flansche zum Anschweißen an entsprechende Elemente eines angrenzenden Rahmens einer benachbarten modularen Zelle in der Struktur auf. Die Längsversteifung erfolgt durch Längsträger an den oberen Ecken, die zusammen einen Kastenquerschnitt bilden, und durch Kanalquerschnittsversteifungen, die die unteren Querträger verbinden. Eine gewellte Platte liegt über den unteren Querträgern und ist mit diesen verbunden.

Weiterhin offenbart die EP 3 689 718 A1 ein Fahrzeug, aufweisend einen Gitterrahmen, der eine Gerippetragstruktur des Fahrzeugs bildet und einen Personenaufenthaltsraum des Fahrzeugs begrenzt. Mindestens eine Ausstattungskomponente ist in dem Personenaufenthaltsraum angeordnet und zumindest teilweise als ein tragender Abschnitt des Gitterahmens in den Gitterrahmen integriert. Es ist somit möglich, die Ausstattungskomponenten zur Kraftüberragung im Gitterrahmen mit einzubeziehen. So übernehmen sie zusätzliche Funktionen im Fahrzeug.

Entsprechend ist es Aufgabe der Erfindung, eine einfacher zu fertigende selbsttragende Karosserie bzw. ein einfacher zu fertigendes Fahrzeug mit einer derartigen Karosserie bereitzustellen. Insbesondere ist es hierbei eine Aufgabe der Erfindung, eine Lösung bereitzustellen, die ein Fertigen verschiedener Karosserievarianten ohne große Änderungen der Arbeitsabläufe bzw. ohne große Modifikationen der Montageanlagen ermöglicht.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der Grundgedanke der Erfindung ist hierbei, eine selbsttragende Karosserie aus mehreren, für verschiedene Fahrzeugvarianten verwendbaren, Karosseriemodulen zusammenzusetzen, wobei die einzelnen Karosseriemodule - quasi "scheibenweise" - in Fahrzeuglängsrichtung hintereinander angeordnet werden sollen. Neben dem Vorteil, dass dadurch je nach Ausgestaltung und Anordnung der, vorzugsweise vorgefertigten, Module baukastenartig verschiedene Karosserievarianten zusammengestellt werden können, ermöglicht das zusätzliche Verwenden einer ähnlichen, bevorzugt quaderförmigen, Grundstruktur bei zumindest einem Teil der Module sich wiederholende bzw. ähnliche Arbeitsabläufe und damit eine einfache und schnelle Fertigung.

Gemäß einem ersten unabhängigen Lösungsgedanken wird hierbei ein Fahrzeug zur Personenbeförderung, wie beispielsweise ein Omnibus, mit einer selbsttragenden Karosserie bereitgestellt. Die Karosserie ist dabei aus mehreren, für verschiedene Fahrzeugvarianten verwendbaren, Karosseriemodulen zusammengesetzt. Entsprechend kann in diesem Zusammenhang auch von einer "modular aufgebauten" Karosserie bzw. einer Karosserie "in Modulbauweise" gesprochen werden. Die, vorzugsweise vorgefertigten, Karosseriemodule - welche auch als Karosseriesegmente bzw. Karosserieblöcke bezeichnet werden können - sollen hierbei folgende Komponenten umfassen: ein Frontmodul, das eine Aussparung zur Aufnahme einer Windschutzscheibe umfasst, ein Heckmodul sowie mehrere, in Fahrzeuglängsrichtung aneinandergereihte, Verbindungsmodule, über die das Frontmodul mit dem Heckmodul verbunden ist. Insgesamt wird dadurch auf vorteilhafte Weise ein Fahrzeug mit einer, entlang der Fahrzeuglängsrichtung segmentierten, Karosserie bereitgestellt, welche sich besonders für eine, im Fahrzeugbau zumeist verwendete, Fließfertigung eignet, da durch die bereitgestellte Lösung die Karosserie durch wiederholtes Ausführen desselben Arbeitsschritts (Anfügen eines Moduls) sukzessive in die Länge wachsen kann.

Wie vorstehend bereits aus der entsprechenden Bezeichnung der Module ersichtlich, kann in diesem Zusammenhang als Frontmodul ein in Fahrzeuglängsrichtung vorne liegendes und/oder ein eine Fahrgastzelle in Fahrzeuglängsrichtung nach vorne abschließendes Modul verstanden werden. Entsprechend kann als Heckmodul ein in Fahrzeuglängsrichtung hinten liegendes und/oder ein die Fahrgastzelle in Fahrzeuglängsrichtung nach hinten abschließendes Modul verstanden werden. Das Heckmodul kann hierbei ferner auch eine Aussparung zur Aufnahme einer Heckscheibe umfassen. Letztlich ist zu erwähnen, dass die mehreren, in Fahrzeuglängsrichtung aneinandergereihten, Verbindungsmodule die Fahrgastzelle in Fahrzeugquerrichtung und Fahrzeughöhenrichtung begrenzen können.

Gemäß der Erfindung kann ist der Karosseriemodule in Gitterrahmenbauweise ausgeführt. Mit anderen Worten kann jedes der Karosseriemodule eine Vielzahl, zu einem Raumfachwerk zusammengefügter, Profilträger umfassen. Auf vorteilhafte Weise kann dadurch eine hohe Steifigkeit der Karosserie bei gleichzeitig möglichst geringem Eigengewicht bereitgestellt werden. Zudem oder alternativ weist jedes der Karosseriemodule auch eine selbsttragende, vorzugsweise käfigartige, Gitterrahmenstruktur auf. D. h., neben dem Umstand, dass die gesamte (zusammengesetzte) Karosserie selbsttragend ist, kann somit auch jedes einzelne Modul (für sich) als in sich tragend ausgeführt sein. Vorteilhaft daran ist, dass dadurch der Transport bzw. die Lagerung der Module erleichtert wird.

Gemäß einem ersten Aspekt der Erfindung können die mehreren Verbindungsmodule zumindest ein Achs-Verbindungsmodul umfassen. Das Achs-Verbindungsmodul kann dabei eine Befestigungsstelle zur Anbringung einer Fahrzeugachse am Achs-Verbindungsmodul aufweisen. Im Gegensatz zur oftmals üblichen Rahmenbauweise, bei der die Fahrzeugachse am Fahrgestell (Leiterrahmen) befestigt ist, kann hier die Fahrzeugachse somit direkt an der (tragenden) Karosserie selbst angebracht werden. Ferner kann das Achs-Verbindungsmodul zwei, vorzugsweise durch bogenartige Aussparungen im Gitterrahmen gebildete, Radkästen umfassen. Weiterhin kann das Achs-Verbindungsmodul in einem - bezüglich der Fahrzeughöhenrichtung - unteren Bereich mehr Verstrebungen aufweisen als in einem oberen Bereich. In diesem Zusammenhang kann auch von einer Profilhäufung im unteren Bereich des Moduls gesprochen werden.

Zusätzlich oder alternativ zum zumindest einem Achs-Verbindungsmodul können die mehreren Verbindungsmodule zumindest auch ein Tür-Verbindungsmodul umfassen, das eine Aussparung zur Aufnahme einer Fahrzeugtür aufweist. Durch die vorgenannten speziellen Verbindungsmodulformen können auf vorteilhafte Weise die Achs- bzw. Türanzahl des Fahrzeugs insgesamt sowie deren exakte Position am Fahrzeug im Speziellen einfach durch entsprechendes Vorsehen bzw. Anordnen der jeweiligen Module festgelegt werden und damit verschiedene Fahrzeugvarianten auf Grundlage derselben Verbindungsmodulkomponenten (Gleichteilstrategie) erzeugt werden.

Gemäß einem weiteren Aspekt der Erfindung kann jedes der Verbindungsmodule einen, vorzugsweise im Wesentlichen quaderförmigen, Grundrahmen (z. B. aus Rechteckhohlprofilträgern) mit einer Vielzahl an fachwerkartigen Verstrebungen umfassen. Mit anderen Worten können alle Verbindungsmodule im Wesentlichen dieselbe (quaderförmige) Grundstruktur aufweisen, wobei die Art und Anzahl der, den Grundrahmen jeweils versteifenden, Verstrebungen je nach Modul variieren kann. Das Merkmal, dass der Grundrahmen dabei "im Wesentlichen quaderförmig" sein kann, soll in diesem Zusammenhang derart verstanden werden, dass der Grundrahmen nicht zwingend ein perfekter Quader mit zwölf Kanten sein muss, von denen jeweils vier gleiche Längen besitzen und zueinander parallel sind. Vielmehr können auch einzelne oder mehrere Quaderkanten fehlen, solange die vom Grundrahmen aufgespannte äußere Form - d. h. die Hüllform eines quasi "verpackten" Verbindungsmoduls - im Wesentlichen quaderförmig ist. Vorzugsweise sind die Kanten des quaderförmigen Grundrahmens dabei jeweils entlang einer der Fahrzeughauptrichtungen (Fahrzeuglängsrichtung, Fahrzeugquerrichtung bzw. Fahrzeughöhenrichtung) orientiert. Aufgrund der für alle Verbindungsmodule gleichen Grundrahmenform kann auf vorteilhafte Weise zum einen durch die damit einhergehenden wiederkehrenden Arbeitsschritte bei der Montage eine einfache und schnelle Fertigung der Karosserie realisiert werden, zum anderen wird ein einfacher Umbau der Karosserie z. B. durch Austausch von Modulen ermöglicht.

Nach einem weiteren Aspekt der Erfindung kann der Grundrahmen einen, vorzugsweise im Wesentlichen rechteckigen, Dachrahmen und einen, vorzugsweise im Wesentlichen rechteckigen, Bodenrahmen umfassen, wobei der Dachrahmen über in Fahrzeughöhenrichtung verlaufende, Stützprofile mit dem Bodenrahmen verbunden sein kann. Bevorzugt kann der Dachrahmen dabei über vier Stützprofile mit dem Bodenrahmen verbunden sein. Die Ausdrücke "Dachrahmen" und "Bodenrahmen" sollen hierbei angeben, dass die entsprechenden Rahmen jeweils im Dachbereich des Fahrzeugs bzw. im Bodenbereich des Fahrzeugs angeordnet sind. Weiterhin kann die eben beschriebene Grundrahmenstruktur, wie vorstehend bereits ausgeführt, eine Vielzahl den Grundrahmen versteifender, vorzugsweise gerader, Verstrebungen in der Art eines Raumfachwerks umfassen, wobei deren exakte Art und Anzahl je nach Modul variieren können.

Um auf vorteilhafte Weise ein möglichst einfaches Aneinandersetzen bzw. Verbinden der Module zu ermöglichen, können gemäß einem weiteren Aspekt der Erfindung die Grundrahmen zweier benachbarter Verbindungsmodule in einer senkrecht zur Fahrzeuglängsrichtung verlaufenden Berührungsebene zumindest teilweise deckungsgleich, vorzugsweise komplett deckungsgleich, ausgebildet sein. Mit anderen Worten können die zueinander orientierten Seitenflächen zweier benachbarter Grundrahmen zumindest abschnittsweise, vorzugsweise komplett, dieselbe Form und Größe besitzen. Hierbei ist besonders vorteilhaft, wenn die Seitenflächen der Grundrahmen jeweils dasselbe Trägerprofil und/oder die entsprechenden Profilträger dieselben Außenmaße bzw. dieselbe Dicke aufweisen.

Zudem oder alternativ können die Grundrahmen zweier benachbarter Verbindungsmodule in einer senkrecht zur Fahrzeuglängsrichtung verlaufenden Berührungsebene zumindest teilweise flächig, vorzugsweise vollflächig, aneinander anliegen. Beispielsweise können sich die Grundrahmen zweier benachbarter Verbindungsmodule jeweils mit einer Seite der Dachrahmen, Bodenrahmen und/oder Stützprofile flächig berühren. Auf vorteilhafte Weise kann dadurch ein ausreichender Kontakt zwischen den einzelnen Modulen für ein sicheres Verbinden sichergestellt werden.

Nach einem weiteren Aspekt der Erfindung können die jeweiligen Grundrahmen zumindest abschnittsweise einen Träger mit geschlossenem Rechteckhohlprofil und/oder einen Träger mit zur Berührungsebene offenem U-Profil umfassen. Im Falle der Verwendung eines Rechteckhohlprofils ist es dabei besonders vorteilhaft, wenn der Querschnitt der sich berührenden Träger gerade halb so groß wie der Querschnitt der sich nicht berührenden Träger ist, wodurch durch das Zusammensetzen auf vorteilhafte Weise eine einheitliche Trägerstärke über die gesamte Karosserie erreicht werden kann.

Zudem oder alternativ können die jeweiligen Grundrahmen miteinander an mehreren Schweißstellen verschweißt sein, wobei sich die Schweißstellen in der Berührungsebene befinden. Mit anderen Worten können die Grundrahmen zweier benachbarter Verbindungsmodule im Wesentlichen in einer Ebene senkrecht zur Fahrzeuglängsrichtung verschweißt sein. Vorzugsweise sind die beiden Grundrahmen mittels einer umlaufenden Schweißnaht miteinander verbunden. Da sich dabei dieser Arbeitsschritt (umlaufendes Verschweißen zweier Module quer zur Fahrzeuglängsrichtung) beim Verschweißen der gesamten Karosserie über die Fahrzeuglänge mehrfach wiederholt, kann dadurch auf vorteilhafte Weise eine einfache und schnelle Fertigung der Karosserie (beispielsweise durch relatives Verfahren von Karosserie und Schweißroboter in Fahrzeuglängsrichtung) realisiert werden.

Um auf vorteilhafte Weise eine hohe Stabilität der Verbindungsmodule zu erreichen, können deren Grundrahmen - gemäß einem weiteren Aspekt der Erfindung - jeweils zumindest eine Anbindungsstelle aufweisen, an der mindestens drei, vorzugsweise mindestens vier, Verstrebungen am Grundrahmen strahlenartig befestigt sind. Die Anbindungsstelle kann in diesem Zusammenhang auch als Knoten bezeichnet werden. Vorzugsweise sind diese Anbindungsstellen bzw. Knoten in der Karossiere wiederkehrend verteilt und ähneln sich hinsichtlich der Profilanbindung und/oder der daran befestigten Profilquerschnitte.

Zudem oder alternativ können die Grundrahmen der Verbindungsmodule jeweils zumindest eine Diagonal-Verstrebung aufweisen, welche sich in einer Ebene senkrecht zur Fahrzeuglängsrichtung über zumindest die Hälfte, vorzugsweise 2/3, der Höhe des Grundrahmens erstreckt. Mit anderen Worten können die Grundrahmen eine Verstrebung umfassen, die innerhalb der, durch die Grundrahmen in Fahrzeugquer- und Fahrzeughöhenrichtung begrenzten, Fahrgastzelle verläuft. Bevorzugt ist die zumindest eine Diagonal-Verstrebung dabei an ihrem einen Ende mit dem Bodenrahmen und an ihrem anderen Ende mit einem Stützprofil verbunden, wobei besonders bevorzugt die Verbindungsstelle mit dem Stützprofil im oberen Drittel der Höhe des Grundrahmens liegt. Vorzugsweise weist jeder der Grundrahmen dabei zumindest zwei dieser vorgenannten Diagonal-Verstrebungen auf. Auf vorteilhafte Weise wird dadurch ebenfalls die Stabilität der Verbindungsmodule erhöht.

Zudem oder alternativ können die Grundrahmen aus einem Stangenprofil, vorzugsweise einem U-Profil oder Rechteckhohlprofil, gefertigt sein. Lediglich beispielhaft kann das Stangenprofil dabei aus Stahl (z. B. Baustahl) bestehen.

Nach einem weiteren Aspekt der Erfindung kann das Fahrzeug zumindest ein Verbindungsmodul umfassen, dessen Verstrebungen nicht symmetrisch zur Fahrzeuglängsmittelebene angeordnet sind. Mit anderen Worten kann das entsprechende Verbindungsmodul - bezogen auf die Fahrzeuglängsrichtung - linksseitig eine unterschiedliche Anzahl an Verstrebungen und/oder eine unterschiedliche Anordnung der Verstrebungen aufweisen als rechtsseitig. Zudem oder alternativ können die Verstrebungen linksseitig auch unterschiedliche Profile und/oder unterschiedliche Materialen als rechtsseitig umfassen.

Neben der Asymmetrie innerhalb eines Verbindungsmoduls kann zudem oder alternativ auch jedes der Verbindungsmodule der Karosserie eine unterschiedliche Anzahl und/oder Anordnung der Verstrebungen aufweisen. Mit anderen Worten können die Verbindungsmodule zwar alle denselben quaderförmigen Grundrahmen aufweisen, jedoch können sich alle Module in der konkreten Ausführung der Verstrebungen unterscheiden. Beispielsweise können die Verstrebungen auf die an der jeweiligen Position innerhalb des Fahrzeugs zu erwartenden Belastungen optimiert sein. Alternativ kann das Fahrzeug - zur Vereinfachung der Produktion - auch zumindest zwei identische Verbindungsmodule umfassen. Beispielsweise kann das Fahrzeug zumindest zwei identische Achs-Verbindungsmodule und/oder zumindest zwei identische Tür-Verbindungsmodule umfassen.

Gemäß einem weiteren Aspekt der Erfindung kann jedes der Karosseriemodule im Dachbereich zumindest eine Aufnahme umfassen. Diese Aufnahmen können dabei in Fahrzeuglängsrichtung zueinander fluchtend angeordnet sein. Mit anderen Worten sollen die Aufnahmen entlang einer geraden Linie verlaufen. Weiterhin können die Karosseriemodule über eine in den Aufnahmen eingelegte Längsschiene verbunden sein. Auf vorteilhafte Weise wird dadurch eine zusätzliche Fixierung der Module bzw. Stabilisierung der Karosserie erreicht. Bevorzugt umfasst jedes der Karosseriemodule hierbei zwei vorgenannte Aufnahmen im Dachbereich, und die Karosseriemodule sind über zwei in den entsprechenden Aufnahmen eingelegte Längsschienen verbunden. Zudem oder alternativ können die Karosseriemodule auch im Bodenbereich zumindest eine Aufnahme umfassen, wobei vorzugsweise die Aufnahmen in Fahrzeuglängsrichtung wiederum zueinander fluchtend angeordnet sind. Weiterhin können die Karosseriemodule über eine in die Aufnahmen im Bodenbereich eingelegte Längsschiene verbunden sein.

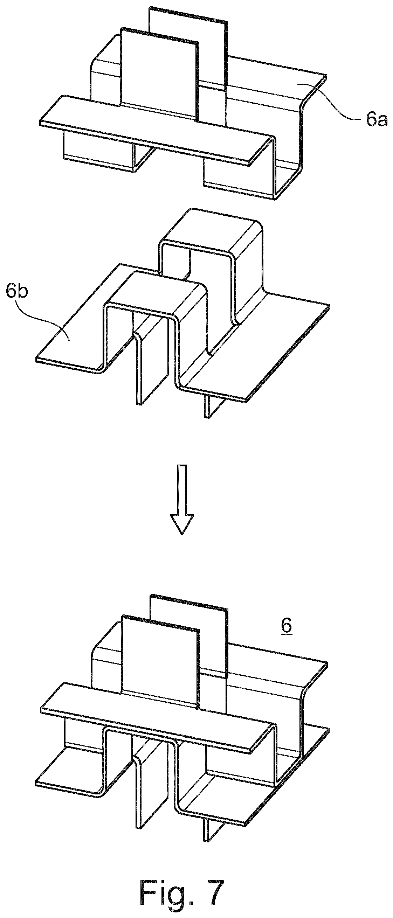

Nach einem weiteren Aspekt der Erfindung können die vorgenannten Aufnahmen jeweils zwei ineinandergesteckte Blechbiegebauteile umfassen. Die Blechbiegebauteile können dabei jeweils mehrere Taschen und Laschen umfassen. Wie hierbei im Zusammenhang mit Figur 7 nochmals explizit beschrieben werden wird, können die Blechbiegebauteile jeweils einen Hut-Profilabschnitt aufweisen, aus dem ein mittlerer Bereich in Form zweier Laschen herausgebogen ist. Auf vorteilhafte Weise wird dadurch ein platzsparendes Anbindungs- bzw. Knotenelement zum Verbinden der Schienen mit den Karosseriemodulen bereitgestellt.

Gemäß weiteren Aspekten der Erfindung können die Verbindungsmodule im Wesentlichen quaderförmig sein. Zudem oder alternativ können sich die Verbindungsmodule in Fahrzeugquerrichtung im Wesentlichen über die gesamte Fahrzeugbreite erstrecken. D. h., mit andern Worten kann der Querschnitt der Verbindungsmodule senkrecht zur Fahrzeuglängsrichtung dem entsprechenden Querschnitt der Karosserie entsprechen. Zudem oder alternativ können die Verbindungsmodule in Fahrzeuglängsrichtung eine geringere Ausdehnung als in Fahrzeugquerrichtung und Fahrzeughöhenrichtung aufweisen. Zudem oder alternativ können die Abmessungen der Verbindungsmodule in Fahrzeugquerrichtung und/oder Fahrzeughöhenrichtung im Wesentlichen der Kontur des Fahrzeugs folgen. Zudem oder alternativ kann die Karossiere, vorzugsweise ausschließlich, in Fahrzeuglängsrichtung segmentiert sein.

Wie vorstehend ausgeführt wurde, handelt es sich bei dem bereitgestellten Fahrzeug um ein Fahrzeug zur Personenbeförderung. Bevorzugt soll das "Fahrzeug zur Personenbeförderung" dabei ein Massentransportmittel zur Personenbeförderung, wie z. B. ein Omnibus oder eine Straßenbahn, sein. Mit anderen Worten kann das Fahrzeug ein großräumiges Fahrzeug sein, das vorzugweise zur Beförderung von mindestens neun Personen ausgelegt ist. Beispielsweise kann das Fahrzeug ein Fahrzeug des öffentlichen Personennahverkehrs sein.

Nach einem weiteren unabhängigen Aspekt der Erfindung wird ein Verfahren zur Fertigung einer selbsttragenden Karosserie für ein Fahrzeug zur Personenbeförderung (z. B. ein Omnibus) bereitgestellt. Die Karosserie ist bzw. wird dabei aus mehreren, für verschiedene Fahrzeugvarianten verwendbaren, Karosseriemodulen zusammengesetzt, wobei das Verfahren folgende Schritte umfasst:
Bereitstellen verschiedener, vorzugsweise vorgefertigter, Karosseriemodule, darunter zumindest ein Frontmodul, das eine Aussparung zur Aufnahme einer Windschutzscheibe umfasst, zumindest ein Heckmodul und zumindest ein Verbindungsmodul. Mit anderen Worten kann in diesem Zusammenhang auch von einem Bereitstellen eines Modulbaukastens mit den vorgenannten Karosseriemodulen gesprochen werden. Das Bereitstellen kann dabei auch ein Lagern der entsprechenden vorgefertigten Karosseriemodule umfassen. Wie vorstehend bereits erwähnt wurde, kann in diesem Zusammenhang als Frontmodul ein in Fahrzeuglängsrichtung vorne liegendes und/oder ein eine Fahrgastzelle in Fahrzeuglängsrichtung nach vorne abschließendes Modul verstanden werden. Als Heckmodul kann ein in Fahrzeuglängsrichtung hinten liegendes und/oder die Fahrgastzelle in Fahrzeuglängsrichtung nach hinten abschließendes Modul verstanden werden. Und als Verbindungsmodul kann ein die Fahrgastzelle in Fahrzeugquerrichtung und Fahrzeughöhenrichtung abschließendes Modul verstanden werden.

Weiterhin umfasst das Verfahren ein Festlegen einer Karosseriemodul-Auswahl an zu verwendenden Karosseriemodulen aus den bereitgestellten Karosseriemodulen in Abhängigkeit von einer zu fertigenden Fahrzeugvariante. Beispielsweise kann das Festlegen das Bestimmen einer jeweiligen Anzahl zu verwendenden Karosseriemodule für jede der bereitgestellten Modularten in Abhängigkeit von einer zu fertigenden Fahrzeugvariante umfassen (z. B. für eine Variante 1: ein Frontmodul, sechs Verbindungsmodule und ein Heckmodul; sowie für eine Variante 2: ein Frontmodul, acht Verbindungsmodule und ein Heckmodul). Entsprechend kann dieser Schritt auch als ein Festlegen einer Karosseriemodul-Auswahl aus dem Modulbaukasten verstanden werden.

Ferner umfasst das Verfahren ein Zusammensetzen der festgelegten Karosseriemodul-Auswahl, wobei die entsprechenden Karosseriemodule in einer Richtung aneinandergereiht werden. Vorzugsweise entspricht diese Richtung dabei der Fahrzeuglängsrichtung des Fahrzeugs. Anders ausgedrückt kann die Karosserie des Fahrzeugs durch sukzessives Hintereinanderreihen der entsprechenden Modulblöcke stückweise in die Länge wachsen. Auf vorteilhafte Weise wird dadurch ein Verfahren zur Karosseriefertigung bereitgestellt, welches sich aufgrund des linearen Charakters des Fertigungsprozesses sowie aufgrund des wiederholten Ausführens desselben Arbeitsschritts (Anfügen eines Moduls) besonders für die im Fahrzeugbau zumeist verwendete Fließfertigung eignet.

Gemäß dem Verfahren ist jedes der Karosseriemodule in Gitterrahmenbauweise ausgeführt und/oder eine selbsttragende, käfigartige Gitterrahmenstruktur aufweist.

Gemäß einem Aspekt der Erfindung kann das Verfahren ferner ein Verschweißen der zusammengesetzten Karosseriemodul-Auswahl umfassen. Vorzugsweise handelt es sich dabei um ein Metall-Aktivgasverschweißen und/oder ein Laserschweißen. Dabei kann gemäß einer ersten Variante zunächst die gesamte festgelegte Karosseriemodul-Auswahl zusammengesetzt werden und anschließend verschweißt werden. Alternativ dazu kann (gemäß einer zweiten Variante) das Zusammensetzen und Verschweißen Modul für Modul erfolgen, derart, dass sukzessive ein Karosseriemodul angefügt und verschweißt wird. Mit anderen Worten können sich im letzteren Fall immer ein Anfügeschritt und ein Verschweißschritt abwechseln.

Nach einem weiteren Aspekt der Erfindung kann das Verschweißen zweier Karosseriemodule im Wesentlichen in einer Ebene senkrecht zu der Richtung erfolgen, in der die Karosseriemodule aneinandergereiht wurden. Mit anderen Worten können zwei aneinandergereihte Karosseriemodule im Wesentlichen in einer Ebene senkrecht zur Fahrzeuglängsrichtung, beispielsweise mittels einer umlaufenden Schweißnaht, verschweißt werden.

Zudem oder alternativ kann das Verschweißen mittels eines Schweißroboters (z. B. einer Portalschweißanlage) erfolgen. Dies kann ferner ein Bewegen des Schweißroboters relativ zur zusammengesetzten Karosseriemodul-Auswahl in der Richtung, in der die Karosseriemodule aneinandergereiht wurden, umfassen. Hierzu kann z. B. der Schweißroboter selbst verfahren werden und/oder die zusammengesetzte Karosseriemodul-Auswahl entsprechend verfahren werden, wobei vorzugsweise der Schweißvorgang selbst dann - wie vorstehend erwähnt - ausschließlich in einer Ebene senkrecht dazu erfolgt. Da sich diese Arbeitsschritte, d. h. ein umlaufendes Verschweißen zweier Module quer zur Fahrzeuglängsrichtung und ein Verfahren entlang der Fahrzeuglängsrichtung, beim Verschweißen der gesamten Karosserie über die Fahrzeuglänge mehrfach wiederholen, kann dadurch auf vorteilhafte Weise eine einfache und schnelle Fertigung der Karosserie z. B. mittels einer Portalschweißanlage realisiert werden.

Im Zusammenhang mit den vorstehend beschriebenen Verfahren sollen ferner auch alle in diesem Dokument im Zusammenhang mit dem Fahrzeug angeführten Aspekte offenbart und beanspruchbar sein. Insbesondere können hierbei die bereitgestellten Karosseriemodule wie in diesem Dokument beschrieben ausgebildet sein. Beispielsweise können die bereitgestellten Karosseriemodule zumindest ein Achs-Verbindungsmodul und zumindest ein Tür-Verbindungsmodul umfassen.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Explosionsdarstellung einer aus mehreren Karosseriemodulen zusammengesetzten selbsttragenden Karosserie eines Fahrzeugs zur Personenbeförderung gemäß einer ersten Ausführungsform;
- Figur 2:: eine schematische Explosionsdarstellung einer aus mehreren Karosseriemodulen zusammengesetzten selbsttragenden Karosserie eines Fahrzeugs zur Personenbeförderung gemäß einer zweiten Ausführungsform;
- Figur 3:: eine zusammengesetzte Darstellung der Karosserie aus Figur 2;
- Figur 4:: eine schematische Darstellung einer Ausführungsform eines einzelnen Karosseriemoduls;
- Figur 5: eine Explosionsdarstellung zweier aneinander gefügter Karosseriemodule;
- Figur 6: zwei mögliche Varianten für ein Aneinanderfügen bzw. Verschweißen von Profilträgern von zwei aneinander gereihten Karosseriemodulen;
- Figur 7: eine, durch das Ineinanderstecken zweier Blechbiegebauteile gebildete, Aufnahme zur Anbindung mehrerer Profilträger; und
- Figur 8:: ein schematisches Flussdiagramm eines Verfahrens zur Fertigung einer selbsttragenden Karosserie für ein Fahrzeug zur Personenbeförderung;

Gleiche oder funktional äquivalente Elemente sind in allen Figuren mit denselben Bezugszeichen beschrieben und zum Teil nicht gesondert beschrieben.

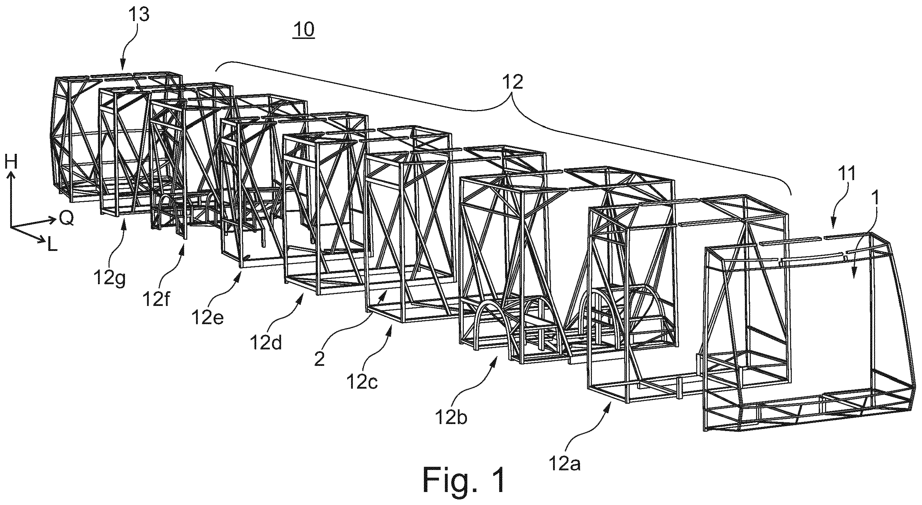

Figur 1 zeigt eine schematische Explosionsdarstellung einer aus mehreren Karosseriemodulen zusammengesetzten selbsttragenden Karosserie 10 eines Fahrzeugs zur Personenbeförderung gemäß einer ersten Ausführungsform. Die modular aufgebaute Karosserie 10 umfasst dabei - lediglich exemplarisch - insgesamt neun Karosseriemodule, darunter ein Frontmodul 11, ein Heckmodul 13 und sieben Verbindungsmodule 12, die im Folgenden zur besseren Unterscheidung als 12a-12g referenziert werden. Die einzelnen Karosseriemodule sind dabei entlang der Fahrzeuglängsrichtung L hintereinander gereiht, wobei das Frontmodul 11 die Karosserie 10 in Fahrzeuglängsrichtung L nach vorne abschließt, das Heckmodul 13 die Karosserie 10 in Fahrzeuglängsrichtung L nach hinten abschließt und die Verbindungsmodule 12a-12g das Frontmodul 11 mit dem Heckmodul 13 verbinden. Entsprechend kann die gesamte Karosserie 10 in Fahrzeuglängsrichtung L als quasi "in Scheiben bzw. Blöcken" aufgebaut verstanden werden. Bevorzugt sind die Karosseriemodule dabei für verschiedene Fahrzeugvarianten verwendbar, sodass auf vorteilhafte Weise selbsttragende Karosserien 10 für verschiedene Fahrzeugvarianten (Modelle) baukastenartig aus denselben Grundelementen gefertigt werden können. Weiterhin sind vorliegend die einzelnen Karosseriemodule beispielhaft in Gitterrahmenbauweise ausgeführt. D. h., jedes der Karosseriemodule umfasst eine Vielzahl, zu einem Raumfachwerk zusammengefügter, Profilträger, wobei sich die einzelnen Module in der konkreten Art, Anzahl bzw. Anordnung der Profilträger unterscheiden können. Auf vorteilhafte Weise kann dadurch eine hohe Steifigkeit der Karosserie 10 bei gleichzeitig möglichst geringem Eigengewicht erreicht werden.

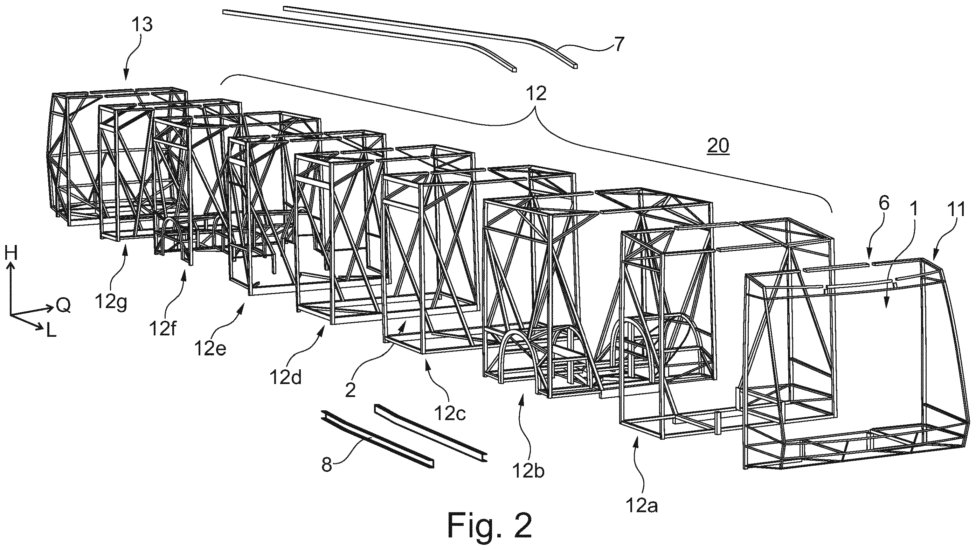

Figur 2 zeigt eine schematische Explosionsdarstellung einer aus mehreren Karosseriemodulen zusammengesetzten selbsttragenden Karosserie 10 eines Fahrzeugs zur Personenbeförderung gemäß einer zweiten Ausführungsform. Im Gegensatz zu der in Figur 1 dargestellten Variante umfasst die Karosserie 10 hierfür zusätzlich im Dachbereich und im Bodenbereich jeweils zwei Längsschienen 7, 8. Diese sind dabei in entsprechende Aufnahmen 6 der Karosseriemodule eingelegt, wobei die jeweiligen "Aufnahmen" vorliegend durch Aussparungen in der Gitterrahmenstruktur gebildet werden. Mit anderen Worten umfasst diese Ausführungsform der Karosserie 10 sowohl im Dachbereich als auch im Bodenbereich jeweils zwei, vorzugsweise parallele, Reihen von Aufnahmen, in die jeweils entsprechende Längsschienen 7, 8 eingelegt und vorzugsweise verscheißt sind. Auf vorteilhafte Weise kann dadurch eine zusätzliche Fixierung der Module bzw. Stabilisierung der Karosserie 10 erreicht werden. Hierbei sei jedoch darauf verwiesen, dass die beiden Längsschienen 8 im Bodenbereich nicht Teil eines separaten Leiterrahmens bzw. separaten Fahrgestells sind, sondern als Teil der selbsttragenden Karossiere 10 in dieser integriert sind.

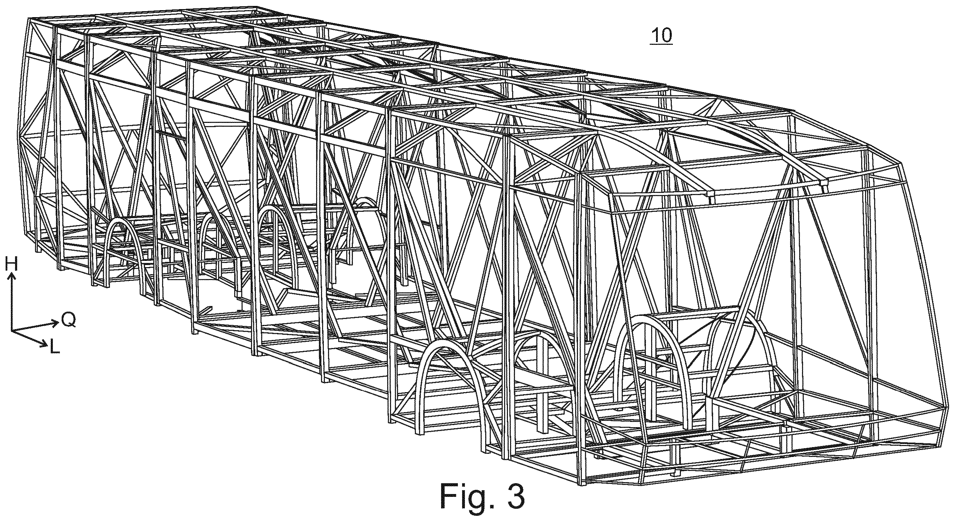

Figur 3 zeigt eine zusammengesetzte Darstellung der Karosserie 10 aus Figur 2. Diese Abbildung verdeutlicht dabei nochmals die Gitterrahmenbauweise der Karosserie 10, d. h., dass diese eine Vielzahl an die Karosserie 10 versteifende Profilträger in der Art eines Raumfachwerks umfasst. Weiterhin ist Figur 3 zu entnehmen, dass die Außenabmessungen der zusammengesetzten Karosseriemodule im Wesentlichen der Kontur des Fahrzeugs folgen bzw. diese definieren. Mit anderen Worten können sich die jeweiligen Karosseriemodule in Fahrzeugquerrichtung Q im Wesentlichen über die gesamte Fahrzeugbreite bzw. in Fahrzeughöhenrichtung H im Wesentlichen über die gesamte Fahrzeughöhe erstrecken.

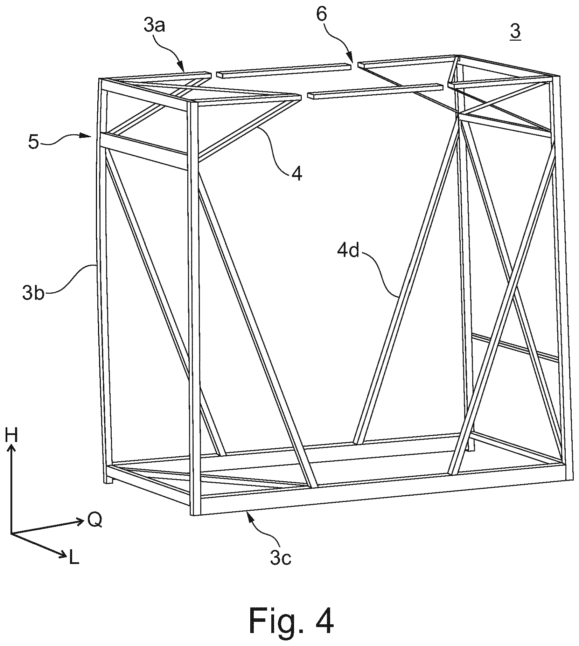

Figur 4 zeigt eine schematische Darstellung einer lediglich beispielhaften Ausführungsform eines einzelnen Karosseriemoduls. Bei dem Karosseriemodul handelt es sich vorliegend um ein Verbindungsmodul 12 zum Verbinden eines Frontmoduls 11 mit einem Heckmodul 13. Das Verbindungsmodul 12 umfasst dabei einen, im Wesentlichen quaderförmigen, Grundrahmen 3 (z. B. aus Rechteckhohlprofilträgern) mit einer Vielzahl an fachwerkartigen Verstrebungen 4 in der Art eines Raumfachwerks. Der Grundrahmen 3 kann hierbei einen, im Wesentlichen rechteckigen, Dachrahmen 3a und einen, im Wesentlichen rechteckigen, Bodenrahmen 3c umfassen, wobei der Dachrahmen 3a über vorliegend vier Stützprofile 3b mit dem Bodenrahmen 3c verbunden ist. Weiterhin umfasst der Grundrahmen 3 des dargestellten Verbindungsmoduls 12 beispielhaft mindestens eine Anbindungsstelle 5, welche auch als Knoten bezeichnet werden kann, an der mindestens drei Verstrebungen 4 am Grundrahmen strahlenartig befestigt sind. Ferner umfasst der Grundrahmen 3 des Verbindungsmoduls 12 vorliegend (wiederum lediglich exemplarisch) zumindest eine Diagonal-Verstrebung 4d, welche sich in einer Ebene senkrecht zur Fahrzeuglängsrichtung L über zumindest die Hälfte, vorzugsweise 2/3, der Höhe des Grundrahmens 3 erstreckt. Mit anderen Worten kann der Grundrahmen 3 eine Diagonal-Verstrebung 4d umfassen, die diagonal innerhalb der Fahrgastzelle verläuft.

Das in Figur 4 dargestellte und vorstehend beschriebene Verbindungsmodul 12 stellt hierbei lediglich eine mögliche Ausführungsform eines Verbindungsmoduls 12 dar. Wie beispielsweise aus Figur 1 ersichtlich ist, kann die Karosserie 10 auch mehrere verschiedene Verbindungsmodule 12 - darunter z. B. ein Achs-Verbindungsmodul 12b mit einer Befestigungsstelle zur Anbringung einer Fahrzeugachse und/oder ein Tür-Verbindungsmodul 12c mit einer Aussparung 2 zur Aufnahme einer Fahrzeugtür - umfassen. Vorteilhaft ist dabei allerdings, wenn alle Verbindungsmodule dabei im Wesentlichen dieselbe (quaderförmige) Grundstruktur aufweisen und sich lediglich in der konkreten Art, Anordnung bzw. Anzahl der, die Grundstruktur versteifenden, Verstrebungen 4 unterscheiden. Auf vorteilhafte Weise kann dadurch die Karosserie 10 in Abhängigkeit des zu fertigenden Fahrzeugmodells baukastenartig auf Grundlage standardisierter Komponenten (Gleichteilstrategie) zusammengestellt werden, wobei aufgrund derselben quaderförmigen Grundform eine einfache und schnelle Fertigung der Karosserie 10 aufgrund sich wiederholender Arbeitsschritte realisiert werden kann.

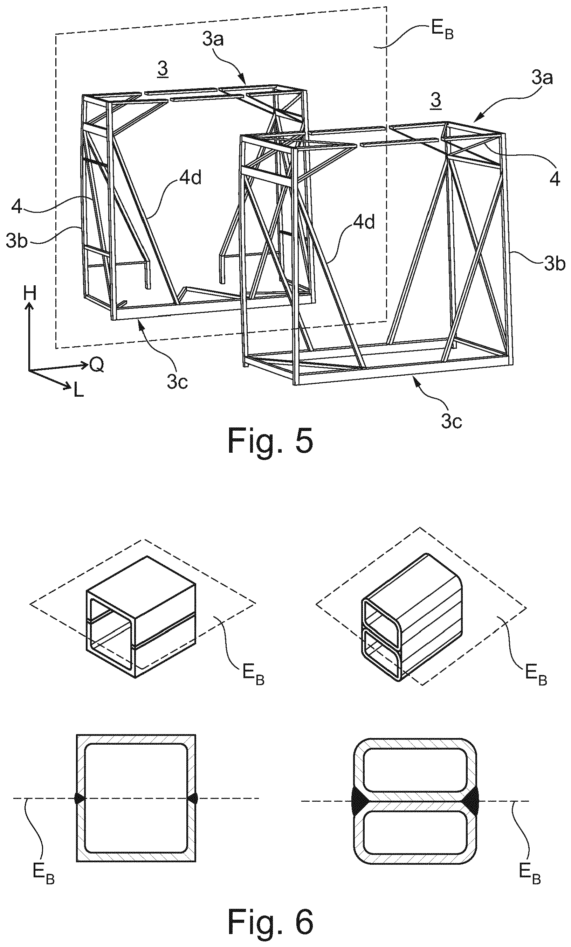

Figur 5 zeigt eine Explosionsdarstellung zweier aneinander gefügter Karosseriemodule. Vorliegend handelt es sich hier um zwei Verbindungsmodule 12 mit quaderförmiger Grundrahmen 3. Diese sind dabei in einer senkrecht zur Fahrzeuglängsrichtung L verlaufenden Berührungsebene E_{B} deckungsgleich ausgebildet, sodass die Grundrahmen 3 in der Berührungsebene E_{B} vollflächig aneinander anliegen. Im Detail weisen die beiden Seitenflächen der Grundrahmen 3 hierbei jeweils abschnittsweise aus denselben Trägerprofilen gebildete rechteckige Rahmen auf, die jeweils durch einen Träger des Dachrahmens, einen Träger des Bodenrahmens sowie zwei Stützprofile gebildet werden. Zusätzlich dazu können die entsprechenden Seitenflächen der Verbindungsmodule - wie im vorliegenden beispielhaften Fall - auch in der Anordnung der Verstrebungen 4, insbesondere der Diagonal-Verstrebungen 4d, übereinstimmen. Durch das vorgenannte deckungsgleiche Aneinanderstoßen der Karosseriemodule wird auf vorteilhafte Weise der Kraftfluss innerhalb der gesamten Karosserie 10 trotz ihres modulartigen Aufbaus nicht unterbrochen.

Figur 6 zeigt ausschnittsweise zwei mögliche Varianten für ein Aneinanderfügen bzw. Verschweißen von Profilträgern von zwei aneinander gereihten Karosseriemodulen. Im linken Fall weisen die beiden Grundrahmen 3 jeweils zumindest abschnittsweise einen Träger mit zur Berührungsebene E_{B} hin offenem U-Profil auf. Durch das Zusammenfügen (Kante auf Kante) und Verschweißen (Schweißnaht schwarz) entsteht so ein geschlossener Träger mit - im vorliegenden Beispiel - annähernd quadratischem Querschnitt. Im rechten Fall weisen die beiden Grundrahmen 3 jeweils zumindest abschnittsweise einen Träger mit geschlossenem Rechteckhohlprofil auf. Durch das Zusammenfügen und Verschweißen (V-Schweißnaht schwarz) entsteht in diesem Fall ein Doppelkammer-Hohlprofil mit - im vorliegenden Beispiel - wiederum annähernd quadratischem Querschnitt. Um über die gesamte Karosseriestruktur eine möglichst einheitliche Profilträgerstärke zu erhalten, ist dabei besonders vorteilhaft, wenn der Querschnitt der sich berührenden Träger gerade halb so groß wie der Querschnitt der sich nicht berührenden Träger ist. Wie ferner aus einer Zusammenschau der Figuren 5 und 6 ersichtlich ist, ermöglicht die quaderförmige Grundstruktur der Karosseriemodule auf vorteilhafte Weise, dass diese mittels einer umlaufenden Schweißnaht quer zur Fahrzeuglängsrichtung L miteinander verbunden werden, wobei sich dieser Arbeitsschritt beim Verschweißen der gesamten Karosserie über die Fahrzeuglänge mehrfach wiederholt. Entsprechend eignet sich die vorliegende Modulbauweise besonders für ein Laserschweißen bzw. die Verwendung einer Portalschweißanlage.

Figur 7 zeigt eine, durch das Ineinanderstecken zweier Blechbiegebauteile 6a, 6b gebildete Aufnahme 6 zur Anbindung mehrerer Profilträger. Die Aufnahme kann in diesem Zusammenhang auch als Knoten bezeichnet werden. Oben dargestellt sind hierbei die beiden einzelnen Blechbiegebauteile, d. h. ein oberes Blechbiegebauteil 6a sowie ein unteres Blechbiegebauteil 6b, vor dem Zusammenstecken, während unten die resultierende Struktur nach dem Zusammenstecken dargestellt ist. Die beiden Blechbiegebauteile 6a und 6b weisen dabei jeweils einen Hut-Profilabschnitt auf, aus dem ein mittlerer Bereich in Form zweier Laschen herausgebogen ist. Hierzu kann z. B. ein zunächst planes Blechbauteil H-förmig eingeschnitten werden und die beiden Laschen mittels Tiefziehen aus dem Blech herausgebogen werden, bevor anschließend das Blechbauteil in die Hut-Profilform umgeformt wird. Die im zusammengesteckten Zustand resultierenden vielfachen Taschen und Laschen ermöglichen hierbei auf vorteilhafte Weise ein einfaches und platzsparendes Befestigen mehrerer Profilträger an dem Knoten.

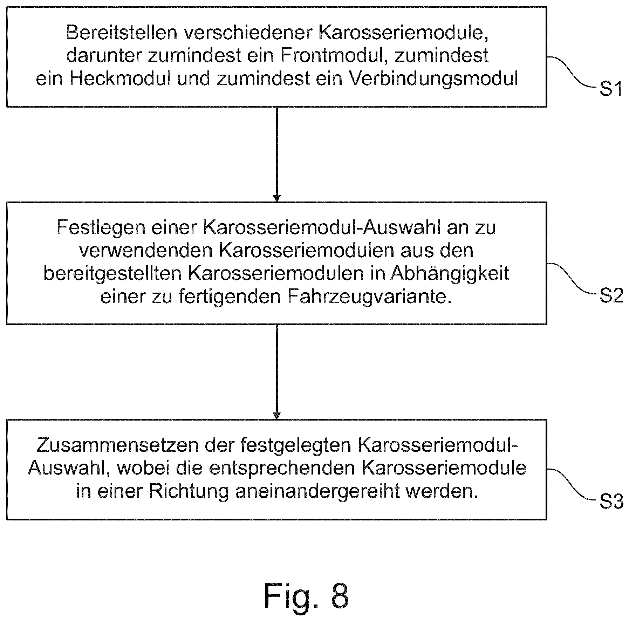

Figur 8 zeigt ein schematisches Flussdiagramm eines Verfahrens zur Fertigung einer selbsttragenden Karosserie 10 für ein Fahrzeug zur Personenbeförderung (z. B. für einen Omnibus). Die Karosserie 10 ist bzw. wird dabei aus mehreren, für verschiedene Fahrzeugvarianten verwendbaren, Karosseriemodulen zusammengesetzt, wobei das Verfahren die folgenden Schritte umfasst: Bereitstellen (S1) verschiedener, vorzugsweise vorgefertigter, Karosseriemodule (Modularten), darunter zumindest ein Frontmodul 11, das vorzugsweise eine Aussparung 1 zur Aufnahme einer Windschutzscheibe umfasst, zumindest ein Heckmodul 13 und zumindest ein Verbindungsmodul 12; Festlegen (S2) einer Karosseriemodul-Auswahl an zu verwendenden Karosseriemodulen aus den bereitgestellten Karosseriemodulen in Abhängigkeit von einer zu fertigenden Fahrzeugvariante. Beispielsweise kann das Festlegen das Bestimmen einer jeweiligen Anzahl zu verwendender Karosseriemodule für jede der bereitgestellten Modularten in Abhängigkeit von einer zu fertigenden Fahrzeugvariante umfassen (z. B. ein Frontmodul, sechs Verbindungsmodule und ein Heckmodul); Zusammensetzen (S3) der festgelegten Karosseriemodul-Auswahl, wobei die entsprechenden Karosseriemodule in einer Richtung aneinandergereiht werden. Vorzugsweise entspricht diese Richtung dabei der Fahrzeuglängsrichtung L des Fahrzeugs. Auf vorteilhafte Weise wird dadurch ein Verfahren zur Karosseriefertigung bereitgestellt, welches sich aufgrund des linearen Charakters des Fertigungsprozesses sowie aufgrund des wiederholten Ausführens desselben Arbeitsschritts (Anfügen eines Moduls) besonders für die im Fahrzeugbau zumeist verwendete Fließfertigung eignet.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Aussparung zur Aufnahme einer Windschutzscheibe
- 2: Aussparung zur Aufnahme einer Fahrzeugtür
- 3: Grundrahmen
- 3a: Dachrahmen
- 3b: Stützprofil
- 3c: Bodenrahmen
- 4: Verstrebung
- 5: Anbindungsstelle
- 6: Aufnahme
- 6a: Oberes Blechbiegebauteil
- 6b: Unteres Blechbiegebauteile
- 7: Längsschiene im Dachbereich
- 8: Längsschiene im Bodenbereich
- 10: Karosserie
- 11: Frontmodul
- 12,12a-12g: Verbindungsmodul
- 13: Heckmodul
- E_{B}: Berührungsebene
- L: Fahrzeuglängsrichtung
- H: Fahrzeughöhenrichtung
- Q: Fahrzeugquerrichtung

## Patentansprüche

1. Fahrzeug zur Personenbeförderung, vorzugsweise Omnibus, mit einer selbsttragenden Karosserie (10), die aus mehreren, für verschiedene Fahrzeugvarianten verwendbaren, Karosseriemodulen zusammengesetzt ist, umfassend:
- ein Frontmodul (11), das eine Aussparung (1) zur Aufnahme einer Windschutzscheibe umfasst;
- ein Heckmodul (13); und
- mehrere, in Fahrzeuglängsrichtung (L) aneinandergereihte, Verbindungsmodule (12), über die das Frontmodul (11) mit dem Heckmodul (13) verbunden ist;
**dadurch gekennzeichnet, dass** jedes der Karosseriemodule in Gitterrahmenbauweise ausgeführt ist und/oder eine selbsttragende, käfigartige Gitterrahmenstruktur aufweist.

2. Fahrzeug nach einem der vorherigen Ansprüche, **dadurch gekennzeichnet, dass** die Verbindungsmodule (12)
a) zumindest ein Achs-Verbindungsmodul (12b) umfassen, das eine Befestigungsstelle zur Anbringung einer Fahrzeugachse am Achs-Verbindungsmodul (12b) aufweist; und/oder
b) zumindest ein Tür-Verbindungsmodul (12c) umfassen, das eine Aussparung (2) zur Aufnahme einer Fahrzeugtür aufweist.

3. Fahrzeug nach einem der vorherigen Ansprüche, **dadurch gekennzeichnet, dass** jedes der Verbindungsmodule (12) einen im Wesentlichen quaderförmigen Grundrahmen (3) mit einer Vielzahl an fachwerkartigen Verstrebungen (4) umfasst.

4. Fahrzeug nach Anspruch 3, **dadurch gekennzeichnet, dass** der Grundrahmen (3) einen Dachrahmen (3a) und einen Bodenrahmen (3c) umfasst, wobei der Dachrahmen (3a) über, vorzugsweise vier, in Fahrzeughöhenrichtung (H) verlaufende, Stützprofile (3b) mit dem Bodenrahmen (3c) verbunden ist.

5. Fahrzeug nach Anspruch 3 oder 4, **dadurch gekennzeichnet, dass** die Grundrahmen (3) zweier benachbarter Verbindungsmodule (12) in einer senkrecht zur Fahrzeuglängsrichtung (L) verlaufenden Berührungsebene (E_{B})
a) zumindest teilweise deckungsgleich, vorzugsweise komplett deckungsgleich, ausgebildet sind; und/oder
b) zumindest teilweise flächig, vorzugsweise vollflächig, aneinander anliegen.

6. Fahrzeug nach Anspruch 5, **dadurch gekennzeichnet, dass** die jeweiligen Grundrahmen (3)
a) zumindest abschnittsweise einen Träger mit geschlossene Rechteckhohlprofil und/oder einen Träger mit zur Berührungsebene (E_{B}) offenem U-Profil umfassen; und/oder
b) miteinander an mehreren Schweißstellen verschweißt sind, wobei sich die Schweißstellen in der Berührungsebene (E_{B}) befinden.

7. Fahrzeug nach einem der Ansprüche 3 bis 6, **dadurch gekennzeichnet,**
a) **dass** die Grundrahmen (3) jeweils zumindest eine Anbindungsstelle (5) aufweisen, an der mindestens drei, vorzugsweise vier, Verstrebungen (4) am Grundrahmen (3) strahlenartig befestigt sind; und/oder
b) **dass** die Grundrahmen (3) jeweils zumindest eine Diagonal-Verstrebung (4d) aufweisen, welche sich in einer Ebene senkrecht zur Fahrzeuglängsrichtung (L) über zumindest die Hälfte, vorzugsweise 2/3, der Höhe des Grundrahmens (3) erstreckt; und/oder
c) **dass** die Grundrahmen (3) aus einem Stangenprofil, vorzugsweise einem U-Profil oder Rechteckhohlprofil, gefertigt sind.

8. Fahrzeug nach einem der Ansprüche 3 bis 7, **dadurch gekennzeichnet,**
a) **dass** das Fahrzeug zumindest ein Verbindungsmodul (12) umfasst, dessen Verstrebungen (4) nicht symmetrisch zur Fahrzeuglängsmittelebene angeordnet sind; und/oder
b) **dass** jedes der Verbindungsmodule (12) eine unterschiedliche Anzahl und/oder Anordnung der Verstrebungen (4) aufweist.

9. Fahrzeug nach einem der vorherigen Ansprüche, **dadurch gekennzeichnet, dass** jedes der Karosseriemodule im Dachbereich zumindest eine Aufnahme (6) umfasst, wobei die Aufnahmen (6) in Fahrzeuglängsrichtung (L) zueinander fluchtend angeordnet sind und wobei die Karosseriemodule über eine in den Aufnahmen (6) eingelegte Längsschiene (7) verbunden sind.

10. Fahrzeug nach Anspruch 9, **dadurch gekennzeichnet, dass** die Aufnahme (6) zwei ineinandergesteckte Blechbiegebauteile (6a, 6b) umfasst.

11. Fahrzeug nach einem der vorherigen Ansprüche, **dadurch gekennzeichnet,**
a) **dass** die Verbindungsmodule (12) im Wesentlichen quaderförmig sind; und/oder
b) **dass** sich die Verbindungsmodule (12) in Fahrzeugquerrichtung (Q) im Wesentlichen über die gesamte Fahrzeugbreite erstrecken; und/oder
c) **dass** die Verbindungsmodule (12) in Fahrzeuglängsrichtung (L) eine geringere Ausdehnung als in Fahrzeugquerrichtung (Q) und Fahrzeughöhenrichtung (H) aufweisen;
d) **dass** die Abmessungen der Verbindungsmodule (12) in Fahrzeugquerrichtung (Q) und/oder Fahrzeughöhenrichtung (H) im Wesentlichen der Kontur des Fahrzeugs folgen.

12. Verfahren zur Fertigung einer selbsttragenden Karosserie (10) für ein Fahrzeug zur Personenbeförderung, vorzugsweise für einen Omnibus, wobei die selbsttragende Karosserie (10) aus mehreren, für verschiedene Fahrzeugvarianten verwendbaren, Karosseriemodulen zusammengesetzt ist, umfassend die Schritte:
- Bereitstellen verschiedener, vorzugsweise vorgefertigter, Karosseriemodule, darunter zumindest ein Frontmodul (11), das eine Aussparung (1) zur Aufnahme einer Windschutzscheibe umfasst, zumindest ein Heckmodul (13) und zumindest ein Verbindungsmodul (12);
- Festlegen einer Karosseriemodul-Auswahl an zu verwendenden Karosseriemodulen aus den bereitgestellten Karosseriemodulen in Abhängigkeit von einer zu fertigenden Fahrzeugvariante;
- Zusammensetzen der festgelegten Karosseriemodul-Auswahl, wobei die entsprechenden Karosseriemodule in einer Richtung aneinandergereiht werden;
**dadurch gekennzeichnet, dass** jedes der Karosseriemodule in Gitterrahmenbauweise ausgeführt ist und/oder eine selbsttragende, käfigartige Gitterrahmenstruktur aufweist.

13. Verfahren nach Anspruch 12, **gekennzeichnet durch** ein Verschweißen, vorzugsweise ein Metall-Aktivgasverschweißen und/oder Laserschweißen, der zusammengesetzten Karosseriemodul-Auswahl, wobei
a) zunächst die gesamte festgelegte Karosseriemodul-Auswahl zusammengesetzt wird und anschließend verschweißt wird; oder
b) das Zusammensetzen und Verschweißen Modul für Modul erfolgt, derart, dass sukzessive eine Karosseriemodul angefügt und verscheißt wird.

14. Verfahren nach Anspruch 13, **dadurch gekennzeichnet,**
a) **dass** das Verschweißen zweier Karosseriemodule im Westlichen in einer Ebene senkrecht zu der Richtung erfolgt, in der die Karosseriemodule aneinandergereiht wurden; und/oder
b) **dass** das Verschweißen mittels eines Schweißroboters erfolgt, wobei dies ein Bewegen des Schweißroboters relativ zum zusammengesetzten Karosseriemodul-Auswahl in der Richtung, in der die Karosseriemodule aneinandergereiht wurden, umfasst.

15. Verfahren nach einem der Ansprüche 12 bis 14, **dadurch gekennzeichnet, dass** die bereitgestellten Karosseriemodule wie in einem der Ansprüche 1 bis 11 ausgebildet sind.

## Claims

1. A vehicle for passenger transport, preferably a bus, comprising a self-supporting body (10), assembled from a plurality of body modules that can be used for different vehicle variants, comprising:
- a front module (11), comprising a recess (1) for receiving a windscreen;
- a rear module (13); and
- several connecting modules (12) arranged in a row in a longitudinal direction (L) of the vehicle, via which the front module (11) is connected to the rear module (13);
**characterized in that** each of the body modules is configured as a lattice frame construction and/or comprises a self-supporting, cage-like lattice frame structure.

2. The vehicle according to any one of the preceding claims, **characterized in that** the connecting modules (12)
a) comprise at least one axle connecting module (12b), comprising a fastening point for fastening a vehicle axle to the axle connecting module (12b); and/or
b) at least one door connecting module (12c) comprising a recess (2) for receiving a vehicle door.

3. The vehicle according to any one of the preceding claims, **characterized in that** each of the connecting modules (12) comprises a substantially rectangular base frame (3) with a plurality of truss-like struts (4).

4. The vehicle according to claim 3, **characterized in that** the base frame (3) comprises a roof frame (3a) and a floor frame (3c), wherein the roof frame (3a) is connected to the floor frame (3c) via, preferably four, support profiles (3b) extending in vehicle height direction (H).

5. The vehicle according to claim 3 or 4, **characterized in that** the base frames (3) of two adjacent connecting modules (12) in a plane of contact (E_{B}) extending perpendicularly to the longitudinal direction (L) of the vehicle
a) are at least partially congruent, preferably completely congruent; and/or
b) lie at least partially flat, preferably completely flat, against each other.

6. The vehicle according to claim 5, **characterized in that** the respective base frames (3)
a) comprise, at least in sections, a carrier with a closed rectangular hollow profile and/or a carrier with a U-profile open to the plane of contact (E_{B}); and/or
b) are welded together at several welding points, the welding points being located in the plane of contact (E_{B}).

7. The vehicle according to any one of claims 3 to 6, **characterized in that**
a) that the base frames (3) each have at least one attachment point (5) at which at least three, preferably four, struts (4) are attached to the base frame (3) in a beam-like manner; and/or
b) **in that** the base frames (3) each have at least one diagonal strut (4d) which extends in a plane perpendicular to the longitudinal direction (L) of the vehicle over at least half, preferably 2/3, of the height of the base frame (3); and/or
c) that the base frames (3) are manufactured from a bar profile, preferably a U-profile or rectangular hollow profile.

8. The vehicle according to any one of claims 3 to 7, **characterized in that**
a) that the vehicle comprises at least one connecting module (12), the struts (4) of which are not arranged symmetrically to the longitudinal center plane of the vehicle; and/or
b) that each of the connecting modules (12) has a different number and/or arrangement of the struts (4).

9. The vehicle according to any one of the preceding claims, **characterized in that** each of the body modules comprises at least one receptacle (6) in the roof region, wherein the receptacles (6) are arranged in alignment with one another in the longitudinal direction (L) of the vehicle and wherein the body modules are connected via a longitudinal rail (7) inserted in the receptacles (6).

10. The vehicle according to claim 9, **characterized in that** the receptacle (6) comprises two sheet metal bending components (6a, 6b) inserted into one another.

11. The vehicle according to any one of the preceding claims, **characterized in that**
a) that the connecting modules (12) are substantially cuboidal; and/or
b) that the connecting modules (12) extend in a transverse direction (Q) of the vehicle essentially over the entire width of the vehicle; and/or
c) that the connecting modules (12) have a smaller extension in a longitudinal direction (L) of the vehicle than in a transverse direction (Q) and a vertical direction (H) of the vehicle;
d) that the dimensions of the connecting modules (12) essentially follow the contour of the vehicle in transverse direction (Q) and/or vertical direction (H) of the vehicle.

12. A method of manufacturing a self-supporting body (10) for a vehicle for transporting passengers, preferably for a bus, wherein the self-supporting body (10) is composed of several body modules that can be used for different vehicle variants, comprising the steps of:
- providing various, preferably prefabricated, body modules, including at least one front module (11), comprising a recess (1) for receiving a windscreen, at least one rear module (13) and at least one connecting module (12);
- determining a body module selection of body modules to be used from the body modules provided dependent on a vehicle variant to be manufactured;
- assembling the determined body module selection, wherein the corresponding body modules are lined up in one direction;
**characterized in that** each of the body modules is configured as a lattice frame construction and/or comprises a self-supporting, cage-like lattice frame structure.

13. The method according to claim 12, **characterized by** welding, preferably metal active gas welding and/or laser welding, the assembled body module selection, wherein
a) the entire predetermined body module selection is first assembled and then welded; or
b) the assembly and welding is carried out module by module such that a body module is successively added and welded.

14. The method according to claim 13, **characterized in that**
a) that the welding of two body modules is performed essentially in a plane perpendicular to the direction in which the body modules have been lined up; and/or
b) that the welding is performed by means of a welding robot, wherein this comprises moving the welding robot relative to the assembled body module selection in the direction in which the body modules have been lined up.

15. The method according to any one of claims 12 to 14, **characterized in that** the provided body modules are configured according to any one of claims 1 to 11.

## Revendications

1. Véhicule destiné au transport de personnes, de préférence omnibus, présentant une carrosserie (10) autoportante qui est composée de plusieurs modules de carrosserie, utilisables pour différentes variantes de véhicule, comprenant :
- un module avant (11), qui comprend un logement (1) destiné à recevoir un pare-brise ;
- un module arrière (13) ; et
- plusieurs modules de liaison (12) mis bout-à-bout dans la direction longitudinale (L) du véhicule, par l'intermédiaire desquels le module avant (11) est relié au module arrière (13) ;
**caractérisé en ce que** chaque module de carrosserie est conçu selon un mode de construction à cadre en treillis et/ou présente une structure autoportante, de type cage, à cadre en treillis.

2. Véhicule selon l'une des revendications précédentes, **caractérisé en ce que** les modules de liaison (12)
a) comprennent au moins un module de liaison (12b) à un essieu, qui présente un site de fixation destiné à appliquer un essieu de véhicule sur le module de liaison (12b) à l'essieu ; et/ou
b) comprennent au moins un module de liaison (12c) à une porte, qui présente un évidement (2) destiné à recevoir une porte de véhicule.

3. Véhicule selon l'une des revendications précédentes, **caractérisé en ce que** chaque module de liaison (12) comprend un cadre de base (3) sensiblement parallélépipédique présentant une multitude d'entretoises (4) de type ossature.

4. Véhicule selon la revendication 3, **caractérisé en ce que** le cadre de base (3) comprend un cadre de toit (3a) et un cadre de fond (3c), le cadre de toit (3a) étant relié au cadre de fond (3c) par l'intermédiaire de profilés d'appui (3b), de préférence quatre, s'étendant dans la direction de la hauteur (H) du véhicule.

5. Véhicule selon la revendication 3 ou 4, **caractérisé en ce que** les cadres de base (3) de deux modules de liaison (12) adjacents, dans un plan de contact (E_{B}) s'étendant perpendiculairement par rapport à la direction longitudinale (L) du véhicule,
a) sont conçus de manière au moins partiellement superposable, de préférence complètement superposable ; et/ou
b) sont placés l'un contre l'autre au moins sur une partie de la surface, de préférence sur toute la surface.

6. Véhicule selon la revendication 5, **caractérisé en ce que** les cadres de base (3) respectifs
a) comprennent au moins par sections un support présentant un profilé creux rectangulaire fermé et/ou un support présentant un profilé en U ouvert vers le plan de contact (E_{B}) ; et/ou
b) sont soudés les uns aux autres en plusieurs sites de soudage, les sites de soudage se trouvant dans le plan de contact (E_{B}).

7. Véhicule selon l'une des revendications 3 à 6, **caractérisé**
a) **en ce que** les cadres de base (3) présentent à chaque fois au moins un site de raccordement (5), auquel sont fixés, en étoile, au moins trois, de préférence quatre, entretoises (4) au corps de base (3) ; et/ou
b) **en ce que** les cadres de base (3) présentent à chaque fois au moins une entretoise en diagonale (4d) qui s'étend dans un plan perpendiculaire à la direction longitudinale (L) du véhicule sur au moins la moitié, de préférence sur 2/3, de la hauteur du cadre de base (3) ; et/ou
c) **en ce que** les cadres de base (3) sont fabriqués à partir d'un profilé en barre, de préférence un profilé en U ou un profilé creux rectangulaire.

8. Véhicule selon l'une des revendications 3 à 7, **caractérisé**
a) **en ce que** le véhicule comprend au moins un module de liaison (12) dont les entretoises (4) ne sont pas disposées de manière symétrique par rapport au plan central longitudinal du véhicule ; et/ou
b) **en ce que** chaque module de liaison (12) présente un nombre et/ou un agencement différent(s) des entretoises (4).

9. Véhicule selon l'une des revendications précédentes, **caractérisé en ce que** chaque module de carrosserie comprend, dans la zone de toit, au moins un logement (6), les logements (6) étant agencés de manière alignée les uns sur les autres dans la direction longitudinale (L) du véhicule et les modules de carrosserie étant reliés par l'intermédiaire d'un rail longitudinal (7) inséré dans les logements (6).

10. Véhicule selon la revendication 9, **caractérisé en ce que** le logement (6) comprend deux composants en tôle pliée (6a, 6b) insérés l'un dans l'autre.

11. Véhicule selon l'une des revendications précédentes, **caractérisé**
a) **en ce que** les modules de liaison (12) sont sensiblement parallélépipédiques ; et/ou
b) **en ce que** les modules de liaison (12) s'étendent, dans la direction transversale (Q) du véhicule, sensiblement sur toute la largeur du véhicule ; et/ou
c) **en ce que** les modules de liaison (12) présentent, dans la direction longitudinale (L) du véhicule, une extension plus petite que celle dans la direction transversale (Q) du véhicule et que celle dans la direction de la hauteur (H) du véhicule ;
d) **en ce que** les dimensions des modules de liaison (12) dans la direction transversale (Q) du véhicule et/ou dans la direction de la hauteur (H) du véhicule suivent sensiblement celles du contour du véhicule.

12. Procédé de fabrication d'une carrosserie (10) autoportante pour un véhicule destiné au transport de personnes, en particulier pour un omnibus, la carrosserie (10) autoportante étant composée de plusieurs modules de carrosserie utilisables pour différentes variantes de véhicule, comprenant les étapes de :
- mise à disposition de plusieurs modules de carrosserie, de préférence préfabriqués, parmi lesquels au moins un module avant (11), qui comprend un logement (1) destiné à recevoir un pare-brise, au moins un module arrière (13) et au moins un module de liaison (12) ;
- détermination d'une sélection de modules de carrosserie parmi les modules de carrosserie mis à disposition en fonction d'une variante de véhicule à fabriquer ;
- réunion de la sélection déterminée de modules de carrosserie, les modules de carrosserie correspondants étant mis bout-à-bout dans une direction ;
**caractérisé en ce que** chaque module de carrosserie est conçu selon un mode de construction à cadre en treillis et/ou présente une structure autoportante, de type cage, à cadre en treillis.

13. Procédé selon la revendication 12, **caractérisé par** un soudage, de préférence un soudage au métal-gaz actif et/ou un soudage au laser, de la sélection réunie de modules de carrosserie,
a) la sélection totale, déterminée, de modules de carrosserie étant d'abord réunie et ensuite soudée ; ou
b) la réunion et le soudage étant effectués module par module de telle sorte qu'un module de carrosserie est successivement adjoint et soudé.

14. Procédé selon la revendication 13, **caractérisé**
a) **en ce que** le soudage de deux modules de carrosserie est effectué sensiblement dans un plan perpendiculaire à la direction dans laquelle les modules de carrosserie ont été mis bout-à-bout: et/ou
b) **en ce que** le soudage est effectué au moyen d'un robot de soudage, ceci comprenant un déplacement du robot de soudage par rapport à la sélection réunie de modules de carrosserie dans la direction dans laquelle les modules de carrosserie ont été mis bout-à-bout.

15. Procédé selon l'une des revendications 12 à 14, **caractérisé en ce que** les modules de carrosserie mis à disposition sont conçus comme dans l'une des revendications 1 à 11.
